(19) **Europäisches Patentamt** / **European Patent Office** / **Office européen des brevets**

(11) **EP 3 357 753 B1**

(12) **FASCICULE DE BREVET EUROPEEN**

(45) Date de publication et mention
de la délivrance du brevet:
**11.09.2019 Bulletin 2019/37**

(51) Int Cl.:
*B60Q 1/14* (2006.01)     *B60Q 1/08* (2006.01)
*B60J 3/04* (2006.01)     *B60K 35/00* (2006.01)

(21) Numéro de dépôt: **18154360.4**

(22) Date de dépôt: **31.01.2018**

(54) **PROCÉDÉ D' AIDE À LA CONDUITE ET SYSTÈME D' AIDE À LA CONDUITE**

FAHRERASSISTENZVERFAHREN UND -SYSTEM

DRIVING ASSISTANCE METHOD AND SYSTEM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **07.02.2017 FR 1750989**

(43) Date de publication de la demande:
**08.08.2018 Bulletin 2018/32**

(73) Titulaire: **Valeo Vision**
**93012 Bobigny Cedex (FR)**

(72) Inventeurs:
• **HUE, David**
**93012 BOBIGNY Cedex (FR)**
• **AHIAD, Samia**
**93012 BOBIGNY CEDEX (FR)**
• **JIN, Hui**
**93012 BOBIGNY Cedex (FR)**

• **BEEV, Kostadin**
**93012 BOBIGNY Cedex (FR)**
• **MEZARI, Rezak**
**93012 BOBIGNY Cedex (FR)**
• **GARNIER, Denis**
**93012 BOBIGNY Cedex (FR)**
• **GUIJARRO, Nicolas**
**93012 BOBIGNY Cedex (FR)**

(74) Mandataire: **Valeo Vision**
**IP Department**
**34, rue Saint André**
**93012 Bobigny (FR)**

(56) Documents cités:
**WO-A1-2016/037671     JP-A- 2006 137 209
US-A1- 2004 263 346     US-A1- 2015 197 139
US-A1- 2016 229 268**

## Description

### Domaine technique

La présente invention concerne un procédé et un système d'aide à la conduite. Elle se situe dans le domaine des dispositifs de protection contre les éblouissements, et plus particulièrement dans le contexte des véhicules automobiles.

### État de la technique antérieure

Durant des situations de conduites nocturnes d'un véhicule automobile, une scène de route perçue par un conducteur et des passagers peut comprendre de nombreuses sources lumineuses : les feux de projection de leur propre véhicule, mais aussi ceux des véhicules croisés, l'éclairage urbain, ou encore les réflexions lumineuses des feux de projection sur le mobilier urbain, et notamment les panneaux de signalisation. Ces nombreuses sources lumineuses, directes ou indirectes, présentent toutes généralement un fort contraste lumineux par rapport à la luminosité moyenne de la scène de route.

On entend par source lumineuse directe une source lumineuse agencée pour produire des rayons lumineux. A contrario, on entend par source lumineuse indirecte une source lumineuse qui ne produit pas par elle-même des rayons lumineux, mais qui réfléchit au moins une partie des rayons lumineux qui parviennent à sa surface. Les mobiliers urbains et les panneaux de signalisation sont des exemples de sources lumineuses indirectes lorsqu'ils sont éclairés par les faisceaux d'éclairages des feux de projection du véhicule automobile.

Dans certains cas, certaines sources lumineuses, et plus particulièrement les sources lumineuses indirectes, peuvent être source d'inconfort pour le conducteur du véhicule automobile et pour ses passagers, en particulier lorsque leur luminosité est telle qu'elles éblouissent le conducteur et/ou les passagers.

On connait d'une part des écrans adaptatifs qui permettent d'adapter leur coefficient de transmission afin de filtrer plus ou moins intensément un flux lumineux incident, de manière à ce qu'un flux lumineux « sortant » d'un tel écran adaptatif soit compris dans une gamme de valeur qui corresponde à une plage de confort pour un utilisateur. De tels écrans adaptatifs trouvent de nombreuses applications dans le domaine automobile où ils sont utilisés notamment pour réduire les situations d'éblouissement durant les conduites nocturnes. En fonction de la luminosité perçue par un photodétecteur, l'écran adaptatif est configuré pour atténuer le flux lumineux incident des sources lumineuses directes perçues depuis le véhicule automobile, réduisant ainsi la quantité de photons perçus par le ou les utilisateurs situés derrière ledit écran adaptatif, et donc leur éblouissement. En revanche, de tels écrans adaptatifs ne permettent pas de réduire l'éblouissement généré par des sources lumineuses indirectes créées à partir de la réflexion du faisceau d'éclairage du véhicule automobile sur un obstacle situé sur la route tel que décrit précédemment.

On connait d'autre part des projecteurs de véhicule automobile comprenant une pluralité de sources électroluminescentes qui permettent de générer un faisceau d'éclairage de la scène de route à partir d'une pluralité de faisceaux lumineux juxtaposés les uns aux autres et émis par chacune des sources électroluminescentes. Ainsi, les faisceaux lumineux émis par chaque source de lumière éclairent une zone particulière de la scène de route, distincte de celles éclairées par les autres sources lumineuses. Lorsqu'une source lumineuse indirecte dépassant un seuil d'éblouissement est détectée, les sources lumineuses des projecteurs du véhicule automobile associées à l'éclairage de la zone de la scène de route sur laquelle est située la source lumineuse indirecte sont configurées pour réduire l'intensité du faisceau lumineux correspondant, afin de réduire l'intensité lumineuse réfléchie par la source lumineuse indirecte, et finalement réduire la sensation d'éblouissement pour le conducteur et les passagers du véhicule automobile.

Cette modulation localisée de l'intensité du faisceau d'éclairage de la scène de route généré par les projecteurs du véhicule automobile conduit à diminuer l'éclairement d'une partie de la scène de route pour réduire l'éblouissement lié à la réflexion partielle du faisceau d'éclairage par un élément présent sur ladite partie de la scène de route. La diminution de l'éclairement de la scène de route, même localisé, en conduite nocturne n'est pas toujours souhaitable.

Un procédé et système comprenant les caractéristiques du préambule des revendication 1 et 10 sont connus du document US2015/197139 A1.

La présente invention a pour objet de proposer un nouveau système d'aide à la conduite afin de répondre au moins en grande partie aux problèmes précédents et de conduire en outre à d'autres avantages.

Un autre but de la présente invention est de réduire l'éblouissement sans diminuer l'intensité lumineuse du faisceau d'éclairage de la scène de route, notamment en conduite nocturne.

### Exposé de l'invention

Selon un premier aspect de l'invention, on atteint au moins l'un des objectifs précités avec un procédé d'aide à la conduite permettant d'adapter une intensité lumineuse perçue par un conducteur de véhicule automobile équipé (i) d'un écran adaptatif comprenant au moins un obturateur piloté par un premier signal de commande et agencé pour filtrer au moins une partie d'un flux lumineux perçu par le conducteur, et (ii) d'au moins un module d'éclairage matriciel comprenant une pluralité de sources lumineuses ledit module d'éclairage matriciel étant piloté par un deuxième signal de commande et configuré pour émettre une pluralité de faisceaux lumineux puisés, lesdits faisceaux lumineux formant collectivement un faisceau d'éclairage d'une scène de route, ledit procédé d'aide à la conduite comprenant les étapes suivantes :

- détection d'une intensité lumineuse réfléchie par au moins un élément de la scène de route ;

- comparaison de l'intensité lumineuse réfléchie par au moins une partie des éléments de la scène de route avec une valeur seuil d'intensité lumineuse dite d'éblouissement ;

- pour chaque élément de la partie des éléments de la scène de route dont l'intensité lumineuse réfléchie est supérieure à l'intensité lumineuse d'éblouissement, modification d'un paramètre du deuxième signal de commande de la ou les sources lumineuses sélectionnées émettant un faisceau lumineux éclairant au moins en partie ledit élément de la scène de route afin de produire un décalage cyclique du deuxième signal de commande correspondant par rapport au premier signal de commande, ledit décalage cyclique conservant sensiblement l'intensité lumineuse du faisceau d'éclairage.

Selon l'invention, le décalage cyclique généré par le procédé d'aide à la conduite permet de conserver constante ou sensiblement constante l'intensité lumineuse du faisceau d'éclairage, comparée par rapport à l'intensité lumineuse dudit faisceau d'éclairage avant la mise en oeuvre du procédé d'aide à la conduite conforme au premier aspect de l'invention. En d'autres termes, le procédé d'aide à la conduite conforme au premier aspect de l'invention permet de générer le décalage cyclique de sorte qu'une variation de l'intensité lumineuse du faisceau d'éclairage soit inférieure à un seuil, par exemple inférieur ou égal à 10% de l'intensité lumineuse du faisceau d'éclairage, préférentiellement inférieur à 5% de l'intensité lumineuse du faisceau d'éclairage, de manière à ce que ladite variation de l'intensité lumineuse du faisceau d'éclairage soit imperceptible à un oeil humain.

L'écran adaptatif comprend au moins un obturateur formant une zone active dont la transmittance moyenne peut être contrôlée via le premier signal de commande. De manière schématique, chaque obturateur de la zone active adressée par le premier signal de commande commute entre un premier état de commutation et un deuxième état de commutation, selon un régime de fonctionnement particulier défini par la forme du premier signal de commande et qui sera décrit ultérieurement.

Le premier signal de commande est du type d'un signal à largeur d'impulsion modulée, dit signal de commande PWM (acronyme pour l'expression anglophone « Pulse Width Modulation ») : à une valeur minimale du premier signal de commande, correspond un premier état de transmission optique de la zone active. A contrario, une valeur maximale du premier signal de commande permet d'établir un deuxième état de transmission optique de la zone active, et donc de configurer ladite zone active dans un deuxième état de commutation.

D'une manière plus générale, le signal de commande est du type d'un signal électrique périodique, préférentiellement numérique, dont la fréquence d'oscillation est comprise entre 100 Hz et 1 kHz. L'utilisation d'un signal périodique permet avantageusement d'augmenter le taux de répétition des transitions entre les deux états de commutation des obturateurs, et donc de minimiser l'énergie électrique nécessaire au fonctionnement de la zone active de l'écran adaptatif.

Le premier état de commutation correspond à une configuration bloquante pour laquelle la transmittance de l'obturateur correspondant est égale à une valeur minimale, par exemple égale à 0 ou proche de 0. A contrario, le deuxième état de commutation correspond à une configuration passante pour laquelle la transmittance de l'obturateur correspondant est égale à une valeur maximale, par exemple égale à 1 ou proche de 1.

Il est ainsi possible de configurer la zone active selon une transmittance moyenne, en considérant la transmittance moyenne comme étant égale à la moyenne temporelle, prise sur une durée d'intégration donnée, des transmittances instantanées de chaque obturateur de ladite zone active. Plus particulièrement, la transmittance moyenne est calculée sur une durée correspondant à quelques cycles de commutation des obturateurs de la zone active, par exemple supérieure à plusieurs centaines de cycles.

On définit aussi une transmittance instantanée lorsque la moyenne temporelle de la transmittance de chaque obturateur formant la zone active est calculée sur une durée correspondant à quelques cycles de commutation desdits obturateurs, par exemple comprise entre quelques cycles à quelques centaines de cycles. En d'autres termes, la transmittance instantanée correspond à la transmittance moyenne calculée sur une durée d'intégration plus faible.

Il est ainsi possible de piloter l'écran adaptatif selon plusieurs régimes différents permettant de configurer une transmittance moyenne particulière de la zone active. À titre d'exemple non limitatif :

- la transmittance moyenne peut être configurée de manière à être proche de 0, la zone active étant complètement ou quasiment complètement occultée, et/ou

- la transmittance moyenne peut être configurée de manière à être proche de 1, la zone active étant complètement ou quasiment complètement transparente, et/ou

- la transmittance moyenne peut être configurée de manière à être égale à une valeur intermédiaire, par exemple proche de 0.5.

Une transmittance moyenne tendant vers 0 permet d'atténuer un flux de lumière incident et traversant la zone active, elle permet par exemple d'éviter un éblouissement ou une gêne lorsque le flux de lumière parvenant à l'écran adaptatif est très important. A contrario, une transmittance moyenne tendant vers 1 permet de laisser passer le flux de lumière incident et traversant la zone active avec une faible atténuation, voire sans atténuation. Une telle valeur de transmittance moyenne est particulièrement adaptée à une situation de faible luminosité dans laquelle par exemple l'intensité du flux de lumière parvenant l'écran adaptatif est suffisamment faible pour ne pas provoquer un éblouissement ou une gêne.

Le module d'éclairage matriciel comprenant au moins une source lumineuse pilotée collectivement ou sélectivement par un module de commande. Les sources lumineuses sont avantageusement issues du même substrat. Plus particulièrement, le module de commande adresse à chacune des sources lumineuses un deuxième signal de commande afin de piloter l'émission du faisceau lumineux correspondant. Chaque source lumineuse peut éventuellement être pilotée par un deuxième signal de commande différent de celui des autres sources lumineuses afin d'adapter précisément la forme et la distribution d'intensité lumineuse du faisceau d'éclairage projeté sur la scène de route.

Selon l'invention, le module d'éclairage matriciel comprend un réseau bidimensionnel de telles sources lumineuses, chaque source lumineuse étant configurée pour pouvoir générer un faisceau lumineux. Les faisceaux lumineux des sources lumineuses sont configurés pour être juxtaposés les uns aux autres, avec ou sans recouvrement. Selon certaines variantes de réalisation, les faisceaux lumineux sont configurés pour former des bandes, toutes les bandes étant orientées suivant une même direction, avec ou sans recouvrement. Selon certaines autres variantes de réalisation, les faisceaux lumineux sont configurés pour former des bandes selon une pluralités de directions et se recouvrant au moins partiellement.

Le ou les deuxièmes signaux de commande sont préférentiellement du type d'un signal électrique pulsé, et préférentiellement encore du type d'un signal PWM, tel que décrit précédemment. Selon un mode de fonctionnement connu, les sources lumineuses sont synchronisées avec l'écran adaptatif, de sorte que les obturateurs oscillent à la même fréquence - ou à un multiple près - que la fréquence de pulsation des sources lumineuses du module d'éclairage.

Conformément à son premier aspect, l'invention permet de réaliser un décalage cyclique entre le premier signal de commande pilotant l'écran adaptatif et au moins un des deuxièmes signaux de commande des sources lumineuses, afin de générer un décalage cyclique entre la pulsation des faisceaux lumineux correspondant et la commutation des obturateurs de l'écran adaptatif. Plus particulièrement, l'invention conforme à son premier aspect permet de réaliser un tel décalage cyclique pour uniquement les sources lumineuses dont le faisceau lumineux est à l'origine de la source indirecte générant l'éblouissement du conducteur et/ou des passagers du véhicule.

L'identification des sources lumineuses impliquées dans un tel éblouissement est assuré par un moyen d'évaluation de l'éblouissement agencé pour détecter une intensité lumineuse réfléchie par au moins un élément de la scène de route, et par une unité de traitement et/ou le module de commande afin de comparer l'intensité lumineuse réfléchie par au moins une partie des éléments de la scène de route avec une valeur seuil d'intensité lumineuse dite d'éblouissement. À titre d'exemples non limitatifs, l'intensité lumineuse d'éblouissement peut être prédéfinie par chaque conducteur en fonction de ses préférences, à l'aide d'une interface graphique par exemple. Alternativement ou complémentairement, l'intensité lumineuse d'éblouissement peut être définie en fonction d'une luminosité ambiante mesurée par un capteur de luminosité ambiante, tel qu'un photodétecteur par exemple. Alternativement ou complémentairement, l'intensité lumineuse d'éblouissement peut être égale à une valeur prédéfinie, préenregistrée dans le module de commande.

Le décalage cyclique entre le premier signal de commande et le ou les deuxièmes signaux de commande est plus particulièrement généré par une modification d'au moins un paramètre du ou des deuxièmes signaux de commande : le premier signal de commande contrôlant l'écran adaptatif n'est pas modifié par le procédé d'aide à la conduite conforme au premier aspect de l'invention.

Sans pour autant modifier la fréquence du deuxième signal de commande, au moins un paramètre dudit deuxième signal de commande est modifié de manière à décaler temporellement l'émission des faisceaux lumineux des sources de lumière identifiées par rapport aux cycles des périodes de commutation des obturateurs de l'écran adaptatif durant lesquels lesdits obturateurs sont configurés dans leur configuration passante. Ce décalage temporel de l'émission des faisceaux lumineux par rapport à la séquence passante des obturateurs permet de réduire le flux lumineux transmis par l'écran adaptatif, et donc de réduire l'éblouissement perçu par le conducteur et/ou les passagers du véhicule sans diminuer le flux lumineux du faisceau d'éclairage éclairant la scène de route, et notamment la partie de la scène de route sur laquelle ledit faisceau d'éclairage se réfléchissait au-delà du seuil d'éblouissement.

De manière particulière, si tous les passagers du véhicule ne sont pas situés derrière l'écran adaptatif, alors seuls ceux qui sont situés derrière l'écran adaptatif percevront une atténuation de l'intensité lumineuse du faisceau d'éclairage de la scène de route ; les passagers situés à côté de l'écran adaptatif ne percevront aucune différence dans l'éclairement de la scène de route.

Le procédé d'aide à la conduite conforme au premier aspect de l'invention peut comprendre avantageusement au moins un des perfectionnements ci-dessous, les caractéristiques techniques formant ses perfectionnements pouvant être prises seules ou en combinaison :

- pour chaque source lumineuse sélectionnée, le paramètre modifié pour produire un décalage cyclique est du type d'une phase ou d'un rapport cyclique du deuxième signal de commande correspondant. Le rapport cyclique est défini comme le rapport entre la durée durant laquelle le deuxième signal de commande est à une valeur maximale et la période dudit deuxième signal de commande. La modification de la phase du ou des deuxièmes signaux de commande peut-être réalisée en introduisant un retard temporel dans le ou les deuxièmes signaux de commande, d'une durée préférentiellement inférieure à la période dudit ou desdits deuxièmes signaux de commande. La modification du rapport cyclique du ou des deuxièmes signaux de commande peut-être réalisée en reconfigurant des électroniques de commande du module d'éclairage matriciel ;

- pour chaque source lumineuse sélectionnée, la modification du paramètre du deuxième signal de commande est telle que le produit de convolution du deuxième signal de commande par le premier signal de commande est proportionnel à un taux d'éblouissement. Le taux d'éblouissement est par exemple défini par la différence entre l'intensité lumineuse réfléchie et l'intensité lumineuse d'éblouissement d'une part, divisée par l'intensité lumineuse d'éblouissement. Alternativement, l'éblouissement peut être caractérisé par d'autres méthodes connues de l'homme du métier, telles que par exemple l'équation de Schmidt-Clausen et Bindels qui sera décrite ultérieurement ;

- pour chaque source lumineuse sélectionnée, la phase du deuxième signal de commande correspondant est modifiée de manière à introduire un déphasage par rapport au premier signal de commande. Tel que décrit précédemment, la « longueur » du déphasage introduit une atténuation proportionnelle de l'intensité lumineuse transmise par l'écran adaptatif ;

- pour chaque source lumineuse sélectionnée, le rapport cyclique du deuxième signal de commande est modifié de manière à décentrer ledit deuxième signal de commande par rapport au premier signal de commande. Tel que décrit précédemment, la « longueur » du décentrage introduit par la modification du rapport cyclique du deuxième signal de commande génère une atténuation proportionnelle de l'intensité lumineuse transmise par l'écran adaptatif ;

- lorsque le rapport cyclique du deuxième signal de commande diminue, l'intensité dudit deuxième signal de commande augmente, et/ou lorsque le rapport cyclique du deuxième signal de commande augmente, l'intensité dudit deuxième signal de commande diminue. D'une manière générale, lorsque le rapport cyclique du deuxième signal de commande varie, l'intensité dudit deuxième signal de commande est modulée de manière à ce que la variation de l'intensité lumineuse du faisceau d'éclairage soit inférieure à un seuil, préférentiellement imperceptible à l'oeil humain, par exemple inférieur à 10% de la valeur de l'intensité lumineuse. Cette configuration avantageuse permet de conserver de manière sensiblement constante les performances optiques du module d'éclairage, et notamment l'intensité lumineuse émise par ledit module d'éclairage, de manière à ce que la scène de route reste éclairée de manière sensiblement invariante lorsque le procédé conforme au premier aspect de l'invention est mis en oeuvre ;

- l'étape de détection d'une intensité lumineuse réfléchie comprend préalablement une étape d'identification d'au moins une source de lumière directe de la scène de route, et/ou une étape d'identification d'au moins une source de lumière indirecte de la scène de route. Comme décrit, précédemment, la source de lumière indirecte étant issue de la réflexion d'au moins une partie du faisceau d'éclairage émis par le module d'éclairage matriciel, il est possible de distinguer les rayons lumineux émis par lesdites sources de lumières indirectes de ceux émis par les sources de lumière directe, par exemple par une comparaison avec les faisceaux lumineux émis par le module d'éclairage matriciel. À titre d'exemple non limitatif, l'étape de détection peut comprendre une étape de comparaison de la fréquence de pulsation des rayons lumineux provenant de la scène de route avec la fréquence de pulsation des faisceaux lumineux émis par le module d'éclairage matriciel. Alternativement ou complémentairement, l'étape de détection peut comprendre une étape de comparaison du spectre des rayons lumineux incidents par rapport au spectre des faisceaux lumineux émis par le module d'éclairage matriciel ;

- l'étape d'identification comprend une étape ultérieure de localisation sur la scène de route de chaque source de lumière indirecte identifiée et une étape d'identification de la ou les sources lumineuses du module d'éclairage matriciel dont les faisceaux lumineux correspondants contribuent à former la source de lumière indirecte correspondante. L'étape de localisation des sources de lumière indirecte sur la scène de route peut être réalisée par un photodétecteur surfacique agencé pour détecter une pluralité de rayons lumineux incidents dans une pluralité de directions. Un étalonnage du photodétecteur lors de son intégration sur le véhicule automobile permet d'associer à la détection d'un rayon lumineux une direction de détection particulière. L'étape d'identification des sources lumineuses du module d'éclairage matriciel dont les faisceaux lumineux contribuent à former la source de lumière indirecte correspondante est réalisée en comparant la direction détectée au cours de l'étape de localisation avec les directions de propagation - connues par étalonnage - des faisceaux lumineux de chaque source lumineuse du module d'éclairage matriciel. Chaque source lumineuse dont au moins une partie des faisceaux lumineux sont émis dans la direction localisée au cours de l'étape de localisation est identifiée et intégrée au procédé d'aide à la conduite conforme au premier aspect de l'invention.

Selon un deuxième aspect de l'invention, il est proposé un système d'aide à la conduite d'un véhicule automobile, ledit système d'aide à la conduite comprenant des dispositifs configurés pour mettre en oeuvre toutes les étapes du procédé d'aide à la conduite conforme au premier aspect de l'invention ou à l'un quelconque de ses perfectionnements.

Selon un troisième aspect de l'invention, il est proposé un système d'aide à la conduite d'un véhicule automobile comprenant :

- au moins un écran adaptatif comprenant au moins un obturateur piloté par un premier signal de commande et agencé pour filtrer au moins une partie d'un flux lumineux perçu par le conducteur ;
- au moins un module d'éclairage matriciel comprenant une pluralité de sources lumineuses, ledit module d'éclairage matriciel étant piloté par un deuxième signal de commande et configuré pour émettre une pluralité de faisceaux lumineux puisés, lesdits faisceaux lumineux formant collectivement un faisceau d'éclairage d'une scène de route ;
- un moyen d'évaluation d'une intensité lumineuse ;
- un module de commande connecté à l'écran adaptatif et au module d'éclairage matriciel, ledit module de commande étant configuré pour générer le premier et le deuxième signal de commande, ledit module de commande étant configuré en outre pour modifier le deuxième signal de commande de la ou les sources lumineuses dont les faisceaux lumineux réfléchis par un élément de la scène de route contribuent à un éblouissement.

Au sens de l'invention conforme à son troisième aspect, l'écran adaptatif, le module d'éclairage matriciel et le module de commande peuvent respectivement être du type de ceux décrits précédemment. Le système d'aide à la conduite conforme au troisième aspect de l'invention peut comprendre avantageusement au moins un des perfectionnements ci-dessous, les caractéristiques techniques formant ses perfectionnements pouvant être prises seules ou en combinaison :

- le système d'aide à la conduite conforme au troisième aspect de l'invention est configuré pour mettre en oeuvre le procédé d'aide à la conduite conforme au premier aspect de l'invention ou selon l'un quelconque de ses perfectionnements ;

- le moyen d'évaluation de l'intensité lumineuse peut alternativement ou complémentairement être configuré pour évaluer un éblouissement ;

- le module de commande modifie le deuxième signal de commande de manière à ce que son produit de convolution avec le premier signal de commande est proportionnel à un taux d'éblouissement. À titre d'exemples non limitatifs, le taux d'éblouissement peut être défini par la différence entre l'intensité lumineuse réfléchie et l'intensité lumineuse d'éblouissement d'une part, divisée par l'intensité lumineuse d'éblouissement, ou selon n'importe quelle autre méthode connue de l'homme du métier, comme l'équation de Schmidt-Clausen et Bindels par exemple et qui sera décrite ultérieurement ;

- le module de commande configure une phase et/ou un rapport cyclique du deuxième signal de commande en fonction de l'intensité lumineuse évaluée par le moyen d'évaluation de l'intensité lumineuse, tel que décrit précédemment en rapport avec le procédé d'aide à la conduite conforme au premier aspect de l'invention ;

- le moyen d'évaluation de l'intensité lumineuse comprend un photodétecteur agencé pour détecter au moins un rayon lumineux provenant de la scène de route ;

- le module de commande est configuré pour déterminer la position de chaque élément de la scène de route dont les faisceaux lumineux réfléchis contribuent à l'éblouissement ;

- l'écran adaptatif est formé par au moins une partie d'un parebrise du véhicule automobile, et/ou un écran disposé entre le parebrise et le conducteur du véhicule automobile, et/ou au moins un verre de lunettes portées par le conducteur du véhicule automobile, et/ou au moins une partie d'une visière d'un casque porté par le conducteur du véhicule automobile ;

- la pluralité d'obturateurs de l'écran adaptatif sont du type à cristaux liquides ;

- la pluralité de sources lumineuses sont du type de diodes électroluminescentes ;

Description des figures

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :

- la FIGURE 1 illustre une vue schématique d'un véhicule automobile intégrant un exemple de réalisation d'un système d'aide à la conduite conforme au premier aspect de l'invention ;
- la FIGURE 2 illustre un diagramme fonctionnel d'un procédé d'aide à la conduite conforme au premier aspect de l'invention ;
- les FIGURES 3A, 3B et 3C illustrent des diagrammes des premier et deuxièmes signaux de commande modifiés par trois exemples de réalisation du procédé d'aide à la conduite conforme au premier aspect de l'invention.

Sur les figures, les éléments communs à plusieurs figures conservent la même référence.

**Description détaillée de l'invention**

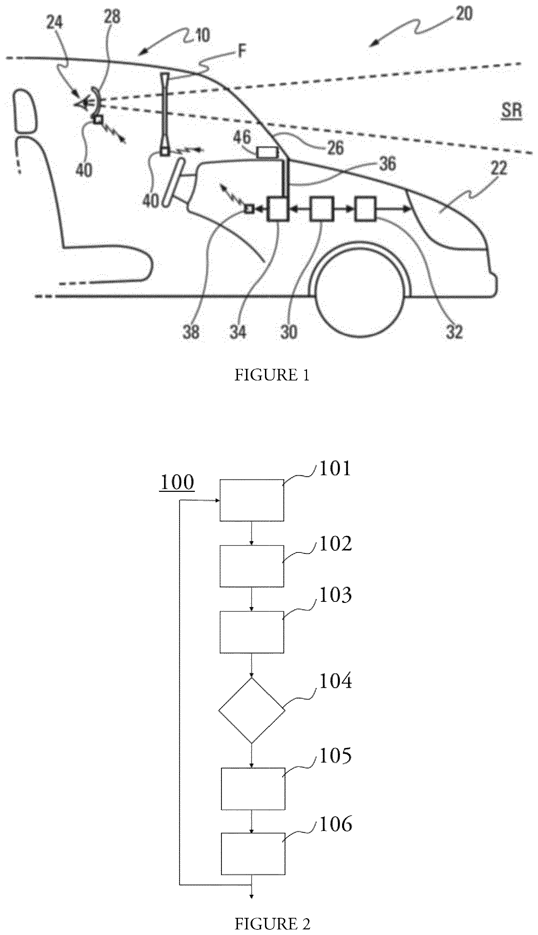

La FIGURE 1 représente de façon schématique en coupe partielle un véhicule automobile 20 comprenant un système d'aide à la conduite 10 conforme au deuxième aspect de l'invention. Le véhicule automobile 20 comprend un module d'éclairage matriciel 22 comprenant une pluralité de sources lumineuses, chaque source lumineuse étant configurée pour émettre une pluralité de faisceaux lumineux pulsés et géométriquement juxtaposés deux à deux, lesdits faisceaux lumineux formant collectivement un faisceau d'éclairage d'une scène de route SR. Le véhicule automobile 20 est piloté par un conducteur, symbolisé par son oeil 24. La scène de route SR correspond à ce qu'observe le conducteur 24 du véhicule automobile 20 en situation de conduite. Le conducteur 24 observe ici la scène de route SR située devant le véhicule 20 et au travers du pare-brise 26.

Le système d'aide à la conduite 10 conforme au deuxième aspect de l'invention comprend aussi un écran adaptatif disposé dans le champ de vision du conducteur 24, et plus particulièrement entre le conducteur et éventuellement une partie des passagers du véhicule automobile 20 d'une part, et la scène de route SR d'autre part. Conformément à l'invention, l'écran adaptatif comprend une pluralité d'obturateurs agencés pour filtrer au moins une partie d'un flux lumineux perçu par le conducteur 24 et provenant de la scène de route SR.

Selon plusieurs variantes de réalisation du système d'aide à la conduite 10 conforme au deuxième aspect de l'invention, l'écran adaptatif peut être formé par :

- d'un écran F proprement dit, placé entre le conducteur 24 et le pare-brise 26, par exemple rabattable à la façon d'un pare-soleil, et/ou
- du pare-brise 26 lui-même ou d'une partie du pare-brise 26, et/ou
- d'au moins un verre de lunettes 28 portées par le conducteur 24, à l'instar de lunettes de soleil ou lunettes correctrices, un seul verre de lunette ayant été représenté sur la FIGURE 1.

Alternativement, selon une variante de réalisation non représentée, l'écran F peut être formé par au moins une partie d'une visière d'un casque porté par le conducteur 24 du véhicule automobile 20, le véhicule automobile étant du type d'une moto bien évidemment dans cette variante de réalisation.

Par commodité, les trois variantes de réalisation précédentes ont été représentées simultanément sur la FIGURE 1. Chaque variante de réalisation est a priori indépendante des autres, un véhicule automobile 20 comprenant de préférence une seule de ces variantes de réalisation. Éventuellement, le conducteur 24 du véhicule automobile 20 comprend plusieurs variantes de réalisation, mais une seule variante de réalisation n'est active à la fois, chacune des variantes de réalisation tendant à obtenir le même résultat.

Dans la suite de la description, le terme « écran adaptatif » sera utilisé pour désigner indifféremment l'un de ces trois modes de réalisation.

Le système d'aide à la conduite 10 conforme au premier aspect de l'invention est dit actif lorsqu'il est en fonctionnement, et inactif lorsqu'il n'est pas en fonctionnement.

Le système d'aide à la conduite 10 est configuré pour contrôler simultanément le module d'éclairage matriciel 22 et l'écran adaptatif de manière à produire un décalage cyclique d'une partie du faisceau d'éclairage de la scène de route SR par rapport à l'écran adaptatif, tout en conservant l'intensité lumineuse du faisceau d'éclairage.

Le module d'éclairage matriciel 22 est piloté par au moins un deuxième signal de commande qui permet de configurer chacune des sources lumineuses du module d'éclairage matriciel 22.

De manière comparable, l'écran adaptatif est piloté par un premier signal de commande qui permet de configurer les obturateurs entre une configuration bloquante et une configuration passante, tel que décrit précédemment.

Pour ce faire, dans l'exemple de réalisation illustré sur la FIGURE 1, le système d'aide à la conduite 10 comprend un module de commande 30 qui génère au moins un deuxième signal de commande, préférentiellement du type d'un signal pulsé, et préférentiellement encore d'un signal du type PWM tel que décrit précédemment, ledit au moins un deuxième signal de commande étant destiné à commander l'émission de faisceaux lumineux par au moins une partie des sources lumineuses du module d'éclairage matriciel 22. Le module de commande 30 génère aussi un premier signal de commande, préférentiellement du type d'un signal PWM tel que décrit précédemment et destiné à commander l'écran adaptatif. Le module de commande 30 eut avantageusement être relié à un circuit de gestion 32 qui commande l'alimentation électrique du module d'éclairage matriciel afin qu'au moins une partie des sources lumineuses émette au moins un faisceau lumineux d'intensité variable entre une valeur maximale et une valeur minimale périodiquement variable selon le premier signal pulsé. Dans ce cas, le circuit de gestion 32 comprend des électroniques de puissance agencées pour polariser les sources lumineuses.

Tel que décrit précédemment, le module de commande 30 modifie le deuxième signal de commande de certaines sources de lumière du module d'éclairage matriciel 22 de manière à diminuer l'intensité lumineuses de la ou des sources lumineuses du module d'éclairage matriciel 22 qui ont impliquées dans l'éblouissement du conducteur 24, par réflexion sur un élément de la scène de route SR. Selon une manière astucieuse qui sera décrie plus en détail en référence à la FIGURE 2, le module de commande 30 peut être configuré pour réduire le produit de convolution du deuxième signal de commande avec le premier signal de commande par rapport au produit de convolution dudit deuxième signal de commande avec ledit premier signal de commande lorsque les pulsations des faisceaux lumineux émis par les sources de lumière sont parfaitement en phases et centrées avec les commutations des obturateurs de l'écran adaptatif. En particulier, le module de commande 30 peut modifier le deuxième signal de commande de manière à ce que son produit de convolution avec le premier signal de commande soit proportionnel à un taux d'éblouissement, tel que décrit ultérieurement en référence à la FIGURE 2.

De manière avantageuse, le module de commande 30 est aussi relié à l'écran adaptatif afin de pouvoir ajuster sa transmittance, tel que décrit précédemment, par l'intermédiaire du premier signal de commande.

Éventuellement, le module de commande 30 est connecté à une électronique de commande 34 agencée pour générer les premiers signaux de commande. Dans ce cas, le module de commande transmet des instructions à l'électronique de commande 34, et cette dernière comprend des électroniques de puissance permettant de générer le premier signal de commande qui configure les obturateurs dudit écran adaptatif.

Si l'écran adaptatif est mobile, dans le cas notamment de lunettes ou d'une visière de casque de moto, ou éloigné du module de commande 30, la transmission du premier signal de commande peut-être réalisée par une liaison sans-fil, en utilisant un protocole de communication sans-fil déterminé, comme par exemple selon les normes IEEE 802.15.1 ainsi que toutes ses extensions (communément dénommé par la marque déposée Bluetooth) ou IEEE 802.11 (communément dénommé par la marque déposée Wi-Fi). Dans ce cas, le système d'aide à la conduite 10 comprend des moyens de communication sans fil 38 agencés pour émettre au moins un signal sans fil portant le premier signal de commande ; et l'écran adaptatif comprend un récepteur 40 agencé pour recevoir le signal sans fil et décoder le premier signal de commande.

De manière avantageuse, le système d'aide à la conduite 10 comprend aussi un moyen d'évaluation de l'intensité lumineuse 46 agencé pour détecter au moins un rayon lumineux provenant de la scène de route SR. Le moyen d'évaluation de l'intensité lumineuse 46 est connecté au module de commande 30 afin de pouvoir déterminer si, parmi les sources de lumière directes ou indirectes détectées sur la scène de route SR, quelles sont celles qui sont à l'origine d'un éblouissement du conducteur et/ou celles qui émettent des rayons lumineux dont une intensité lumineuse est supérieure à un seuil prédéfini. Un exemple de méthode pour déterminer l'éblouissement sera décrit en référence à la FIGURE 2.

Selon un exemple non limitatif, le moyen d'évaluation de l'intensité lumineuse est du type d'un photodétecteur.

De manière avantageuse, le moyen de mesure de l'intensité lumineuse est aussi agencé pour déterminer la position sur la scène de route SR des sources de lumières directes ou indirectes.

La FIGURE 2 décrit un exemple de réalisation du procédé 100 d'aide à la conduite conforme au premier aspect de l'invention, ledit exemple de réalisation comprenant les étapes suivantes :

- une première étape 101 de détection des éléments de la scène de route SR qui forment des sources de lumière directes ou indirecte, à l'aide par exemple d'un photodétecteur ;

- une deuxième 102 étape d'identification des sources lumineuses directes et des sources lumineuses indirectes, seules les sources indirectes étant retenues pour le fonctionnement du procédé 100 d'aide à la conduite conforme au premier aspect de l'invention. Tel que décrit précédemment, les sources de lumière indirectes peuvent facilement être identifiées par rapport aux sources de lumière directes car lesdites sources de lumière indirectes sont corrélées au faisceau d'éclairage généré par le module d'éclairage matriciel 22. Par conséquent, une analyse comparative des paramètres fréquentiels et/ou spectraux et/ou temporels des rayons lumineux réfléchis par la source de lumière indirecte permet de mettre en avant la corrélation avec les faisceaux lumineux émis par les sources de lumière du module d'éclairage 22 et formant ledit faisceau d'éclairage ;

- une troisième 103 étape de localisation de chaque source lumineuse indirecte sur la scène de route, en attribuant par exemple au moins une position selon un premier axe sensiblement transversal à la scène de route, et/ou une position selon un deuxième axe sensiblement perpendiculaire au premier axe ;

- pour chacune des sources de lumière indirecte identifiées, une quatrième étape 104 de détermination de l'éblouissement selon une méthode détaillée ci-après ;

- pour chacune des sources de lumière indirecte générant un éblouissement trop important, une cinquième étape 105 d'identification des sources de lumières du module d'éclairage matriciel 22 générant des faisceaux lumineux qui sont réfléchis par l'élément de la scène de route SR formant ladite source de lumière indirecte correspondante ;

- pour chacune des sources de lumière identifiées à la cinquième étape 106, une sixième étape 106 de modification d'au moins un paramètre du ou des deuxièmes signaux de commande desdites sources de lumière identifiées afin de générer un décalage cyclique par rapport au premier signal de commande pilotant les obturateurs de l'écran adaptatif.

De manière plus particulière, la quatrième étape 104 de détermination de l'éblouissement généré par chaque source de lumière indirecte est réalisée à partir des mesures réalisées par le moyen d'évaluation de l'éblouissement, et notamment par un photodétecteur.

En particulier, il est possible d'utiliser l'équation de Schmidt-Clausen et Bindels et l'échelle de De Boer pour déterminer l'éblouissement provoqué par une source de lumière (directe ou indirecte). L'équation de Schmidt-Clausen et Bindels prend la forme suivante :

$$W = 5 - 2 \log \left( \frac{E}{0.003 \left(1 + \sqrt{L/_{0.04}} \times \phi^{0.46}\right)} \right)$$

Dans cette équation, E est une grandeur donnant une image de la quantité de lumière émise par la source de lumière, et en particulier l'éclairement lumineux mesuré au niveau de l'oeil du conducteur 24, mesuré en lux, L correspond à une luminance d'adaptation, mesurée en candela par mètre carré, et $\phi$ est l'angle, mesuré en arcminute, entre l'axe de vision du conducteur 24 et la source de lumière considérée.

Ainsi, la valeur de W donne une valeur d'éblouissement qui est comparé à l'échelle de De Boer qui permet de déterminer le niveau d'inconfort lié à l'éblouissement. L'échelle de De Boer comprend des paliers discrets de valeurs de W donnant l'inconfort lié à l'éblouissement provoqué par la source de lumière :

- W = 9 : la source lumineuse est à peine perceptible ;

- W = 7 : la luminance correspondante est satisfaisant ;

- W = 5 : la luminance correspondante est admissible ;

- W = 3 : la luminance correspondante est dérangeante ;

- W = 1 : la luminance correspondante est insupportable.

Bien entendu, les valeurs intermédiaires de la valeur W donnent des inconforts intermédiaires entre ces paliers.

Le système d'aide à la conduite 10 est préférentiellement configuré pour calculer une valeur de W pour chacune des sources de lumière identifiées et pour modifier certain des deuxièmes signaux de commande afin d'abaisser cette valeur à des niveaux acceptables et/ou moins dérangeants pour le conducteur 24.

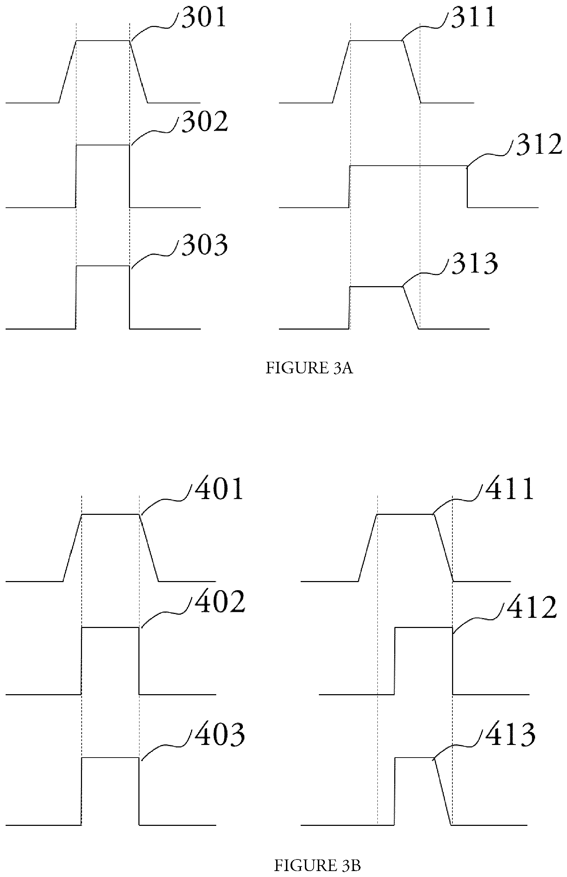

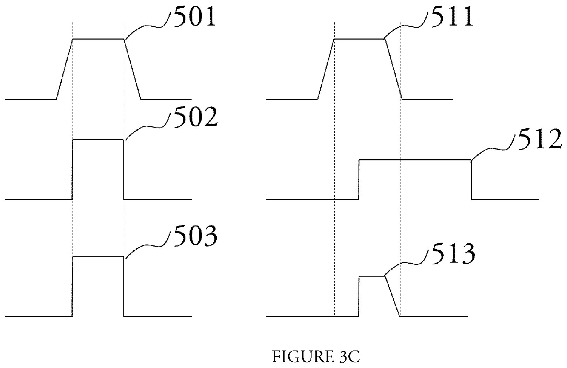

En référence aux FIGURES 3A, 3B et 3C, trois exemples sont présentés de modification des deuxièmes signaux pilotant des sources lumineuses du module d'éclairage matriciel 22 identifiées comme participant à la réflexion - gênante - sur au moins un élément de la scène de route SR et provoquant un éblouissement. Pour chaque diagramme des FIGURES 3A, 3B et 3C, l'abscisse représenté représente le temps, en unités arbitraires, l'ordonnée des diagrammes de la première ligne représente une transmission optique, l'ordonnée des diagrammes de la deuxième ligne représente un flux lumineux lorsque le procédé 100 d'aide à la conduite conforme au premier aspect de l'invention et/ou le système d'aide à la conduite conforme au deuxième aspect de l'invention est inactif, et l'ordonnée des diagrammes de la troisième ligne représente un flux lumineux lorsque le procédé 100 d'aide à la conduite conforme au premier aspect de l'invention et/ou le système d'aide à la conduite conforme au deuxième aspect de l'invention est actif.

La FIGURE 3A illustre au travers plusieurs chronogrammes une modification du deuxième signal de commande des sources lumineuses identifiées à la quatrième étape 104 du procédé 100 conforme au premier aspect de l'invention de manière à générer un décalage cyclique entre ledit deuxième signal de commande et le premier signal de commande pilotant l'écran adaptatif, ladite modification étant du type d'une modification du rapport cyclique du deuxième signal de commande.

Les chronogrammes 301-303 représentent les premier et deuxième signaux de commande du système d'aide à la conduite 10 avant modification; et les chronogrammes 311-313 représentent les premier et deuxième signaux de commande du système d'aide à la conduite 10 après modification.

Le chronogramme 301 illustre une période du premier signal de commande, prenant la forme d'un signal en créneaux dont les fronts transitoires ne sont pas instantanés : ils ne sont pas verticaux mais présentent une pente non infinie. Une valeur minimale du créneau est associée à un état bloquant des obturateurs de l'écran adaptatif : un rayon lumineux incident n'est pas transmis derrière ledit écran adaptatif vers le conducteur 24. A contrario, une valeur maximale du créneau est associée à un état passant des obturateurs de l'écran adaptatif, et un rayon lumineux incident est transmis derrière ledit écran adaptatif vers le conducteur 24.

Le chronogramme 302 illustre une période du deuxième signal de commande pilotant l'une des sources lumineuses du module d'éclairage matriciel. Le deuxième signal de commande prend la forme d'un signal en créneaux. Une valeur minimale du créneau est associée une « période » durant laquelle la source lumineuse n'émet pas de faisceaux lumineux ; et une valeur maximale du créneau correspond à « une période » durant laquelle ladite source lumineuse émet un faisceau lumineux. De manière avantageuse, le deuxième signal de commande est synchronisé avec le premier signal de commande : les valeurs maximales du deuxième signal de commande correspondent sont synchronisées avec les valeurs maximales du premier signal de commande.

Le chronogramme 303 illustre le flux lumineux S1 perçu par le conducteur 24 au travers de l'écran adaptatif et au travers de ce mode de fonctionnement couplé du module d'éclairage matriciel 22 et de l'écran adaptatif. Le flux lumineux S1 correspond à la convolution du premier signal de commande par le deuxième signal de commande illustrés respectivement sur les chronogrammes 301 et 302.Le flux lumineux S1 est représenté par la zone hachurée.

Le chronogramme 311 est exactement identique au chronogramme 301, car dans le procédé 100 d'aide à la conduite conforme au premier aspect de l'invention, c'est le deuxième signal de commande qui est modifié pour produire le décalage cyclique, le premier signal de commande n'est pas modifié.

Le chronogramme 312 correspond à une modification du rapport cyclique du deuxième signal de commande, par rapport audit deuxième signal de commande illustré dans le chronogramme 302. Ainsi, le deuxième signal de commande correspond toujours à un signal en créneaux, mais la « période » durant laquelle ledit deuxième signal de commande a une valeur maximale est désormais plus longue que la « période complémentaire » durant laquelle le deuxième signal de commande a une valeur minimale. Le premier front transitoire du deuxième signal de commande correspond à l'instant où le premier signal de commande atteint sa valeur maximale. En revanche, le deuxième front transitoire est situé après le deuxième front transitoire du premier signal de commande. Ainsi, les faisceaux lumineux émis par la source de lumière sur la durée durant laquelle le premier signal de commande est à sa valeur minimale ne sont pas transmis par l'écran adaptatif. Par conséquent, ils ne participent plus à un éblouissement du conducteur 24, et la luminance perçue par le conducteur au regard de cette source lumineuse diminue. Le chronogramme 313 illustre le flux lumineux S2 perçu par le conducteur 24 suite à ce décalage cyclique. Le flux lumineux S2 perçu par le conducteur 24 après décalage cyclique du deuxième signal de commande par rapport au premier signal de commande est ainsi inférieur au flux lumineux S1 perçu par le conducteur 24 après la mise en oeuvre du procédé 100 d'aide à la conduite conforme au premier aspect de l'invention.

Dans ce mode de réalisation, la « période » durant laquelle les sources lumineuses identifiées émettent des faisceaux lumineux est ainsi allongée afin de « sortir » de la « période » d'ouverture des obturateurs de l'écran adaptatif. Afin de ne pas augmenter l'éclairement de la scène de route SR généré par les rayons lumineux des sources lumineuses identifiées, l'intensité du deuxième signal de commande est avantageusement diminuée d'une manière proportionnelle à l'allongement de ladite « période » afin de réduire l'intensité lumineuse des faisceaux lumineux émis par lesdites sources lumineuses identifiées.

Selon une deuxième variante de réalisation illustrée sur la FIGURE 3B, les chronogrammes 401-403 représentent les premier et deuxième signaux de commande du système d'aide à la conduite 10 avant modification ; et les chronogrammes 411-413 représentent les premier et deuxième signaux de commande du système d'aide à la conduite 10 après modification.

Le chronogramme 401 illustre une période du premier signal de commande, prenant la forme d'un signal en créneaux dont les fronts transitoires ne sont pas instantanés : ils ne sont pas verticaux mais présentent une pente non infinie. Une valeur minimale du créneau est associée à un état bloquant des obturateurs de l'écran adaptatif : un rayon lumineux incident n'est pas transmis derrière ledit écran adaptatif vers le conducteur 24. A contrario, une valeur maximale du créneau est associée à un état passant des obturateurs de l'écran adaptatif, et un rayon lumineux incident est transmis derrière ledit écran adaptatif vers le conducteur 24.

Le chronogramme 402 illustre une période du deuxième signal de commande pilotant l'une des sources lumineuses du module d'éclairage matriciel. Le deuxième signal de commande prend la forme d'un signal en créneaux. Une valeur minimale du créneau est associée une « période » durant laquelle la source lumineuse n'émet pas de faisceaux lumineux ; et une valeur maximale du créneau correspond à « une période » durant laquelle ladite source lumineuse émet un faisceau lumineux. De manière avantageuse, le deuxième signal de commande est synchronisé avec le premier signal de commande : les valeurs maximales du deuxième signal de commande correspondent sont synchronisées avec les valeurs maximales du premier signal de commande.

Le chronogramme 403 illustre le flux lumineux S3 perçu par le conducteur 24 au travers de l'écran adaptatif et au travers de ce mode de fonctionnement couplé du module d'éclairage matriciel 22 et de l'écran adaptatif. Le flux lumineux S3 correspond à la convolution du premier signal de commande par le deuxième signal de commande illustrés respectivement sur les chronogrammes 401 et 402. Le flux lumineux S3 est représenté par la zone hachurée.

Le chronogramme 411 est exactement identique au chronogramme 401, car dans le procédé 100 d'aide à la conduite conforme au premier aspect de l'invention, c'est le deuxième signal de commande qui est modifié pour produire le décalage cyclique, le premier signal de commande n'est pas modifié.

Le chronogramme 412 correspond à une modification de la phase du deuxième signal de commande, en comparaison audit deuxième signal de commande illustré dans le chronogramme 302. Dans ce mode de réalisation, le rapport cyclique reste inchangé, seule la phase est modifiée de manière à décentrer le deuxième signal de commande par rapport au premier signal de commande : désormais, le deuxième signal de commande commute d'une valeur minimale vers une valeur maximale après un retard prédéterminé par rapport à la commutation correspondante du premier signal de commande. On constate aussi que, contrairement au premier exemple de réalisation, la valeur maximale du deuxième signal de commande reste inchangée par rapport à sa valeur « avant modification » et telle qu'illustrée sur le diagramme 402. Consécutivement, le deuxième signal de commande commute aussi d'une valeur maximale vers une valeur minimale après le même retard prédéterminé et par rapport à la commutation correspondante du premier signal de commande. Ainsi, les faisceaux lumineux émis par la source de lumière correspondante sur la durée durant laquelle le premier signal de commande est à sa valeur minimale ne sont pas transmis par l'écran adaptatif. Par conséquent, ils ne participent plus à un éblouissement du conducteur 24, et la luminance perçue par le conducteur au regard de cette source lumineuse diminue. Le chronogramme 413 illustre le flux lumineux S4 perçu par le conducteur 24 suite à ce décalage cyclique. Le flux lumineux S4 perçu par le conducteur 24 après décalage cyclique du deuxième signal de commande par rapport au premier signal de commande est ainsi inférieur au flux lumineux S3 perçu par le conducteur 24 après la mise en oeuvre du procédé 100 d'aide à la conduite conforme au premier aspect de l'invention.

Selon une troisième variante de réalisation illustrée sur la FIGURE 3C, les chronogrammes 501-503 représentent les premier et deuxième signaux de commande du système d'aide à la conduite 10 avant modification ; et les chronogrammes 511-513 représentent les premier et deuxième signaux de commande du système d'aide à la conduite 10 après modification. Le troisième exemple de réalisation correspond à une combinaison des deux premiers exemples de réalisation, la phase et le rapport cyclique du deuxième signal de commande étant modifiés en réponse à une mesure d'intensité lumineuse réfléchie.

Le chronogramme 501 illustre une période du premier signal de commande, prenant la forme d'un signal en créneaux dont les fronts transitoires ne sont pas instantanés : ils ne sont pas verticaux mais présentent une pente non infinie. Une valeur minimale du créneau est associée à un état bloquant des obturateurs de l'écran adaptatif : un rayon lumineux incident n'est pas transmis derrière ledit écran adaptatif vers le conducteur 24. A contrario, une valeur maximale du créneau est associée à un état passant des obturateurs de l'écran adaptatif, et un rayon lumineux incident est transmis derrière ledit écran adaptatif vers le conducteur 24.

Le chronogramme 502 illustre une période du deuxième signal de commande pilotant l'une des sources lumineuses du module d'éclairage matriciel. Le deuxième signal de commande prend la forme d'un signal en créneaux. Une valeur minimale du créneau est associée une « période » durant laquelle la source lumineuse n'émet pas de faisceaux lumineux ; et une valeur maximale du créneau correspond à « une période » durant laquelle ladite source lumineuse émet un faisceau lumineux. De manière avantageuse, le deuxième signal de commande est synchronisé avec le premier signal de commande : les valeurs maximales du deuxième signal de commande correspondent sont synchronisées avec les valeurs maximales du premier signal de commande.

Le chronogramme 503 illustre le flux lumineux S3 perçu par le conducteur 24 au travers de l'écran adaptatif et au travers de ce mode de fonctionnement couplé du module d'éclairage matriciel 22 et de l'écran adaptatif. Le flux lumineux S3 correspond à la convolution du premier signal de commande par le deuxième signal de commande illustrés respectivement sur les chronogrammes 501 et 502. Le flux lumineux S3 est représenté par la zone hachurée.

Le chronogramme 511 est exactement identique au chronogramme 401, car dans le procédé 100 d'aide à la conduite conforme au premier aspect de l'invention, c'est le deuxième signal de commande qui est modifié pour produire le décalage cyclique, le premier signal de commande n'est pas modifié.

Le chronogramme 512 correspond à une modification de la phase et du rapport cyclique du deuxième signal de commande, en comparaison audit deuxième signal de commande illustré dans le chronogramme 502. Dans ce mode de réalisation, la phase du deuxième signal de commande est modifiée de manière à décentrer ledit deuxième signal de commande par rapport au premier signal de commande, et la « période » durant laquelle ledit deuxième signal de commande a une valeur maximale est désormais plus longue que la « période complémentaire » durant laquelle le deuxième signal de commande a une valeur minimale, en comparaison au deuxième signal de commande illustré sur le diagramme 502. Consécutivement, le deuxième signal de commande commute d'une valeur minimale vers une valeur maximale après un retard prédéterminé par rapport à la commutation correspondante du premier signal de commande, et selon un rapport cyclique modifié.

Ainsi, les faisceaux lumineux émis par la source de lumière correspondante sur la durée durant laquelle le premier signal de commande est à sa valeur minimale ne sont pas transmis par l'écran adaptatif. Par conséquent, ils ne participent plus à un éblouissement du conducteur 24, et la luminance perçue par le conducteur au regard de cette source lumineuse diminue. Le chronogramme 513 illustre le flux lumineux S4 perçu par le conducteur 24 suite à ce décalage cyclique composé de la modification de la phase du deuxième signal de commande et de son rapport cyclique. Le flux lumineux S4 perçu par le conducteur 24 après décalage cyclique du deuxième signal de commande par rapport au premier signal de commande est ainsi inférieur au flux lumineux S3 perçu par le conducteur 24 après la mise en oeuvre du procédé 100 d'aide à la conduite conforme au premier aspect de l'invention.

Dans ce mode de réalisation, la modification du rapport cyclique du deuxième signal de commande entraîne un allongement de la « période » durant laquelle les sources lumineuses identifiées émettent des faisceaux lumineux afin de « sortir » de la « période » d'ouverture des obturateurs de l'écran adaptatif. La « sortie » de la période d'ouverture des obturateurs de l'écran adaptatif est amplifiée par le déphasage généré conjointement à la modification du rapport cyclique. Aussi, afin de ne pas augmenter l'éclairement de la scène de route SR généré par les rayons lumineux des sources lumineuses identifiées, l'intensité du deuxième signal de commande est avantageusement diminuée d'une manière proportionnelle à l'allongement de ladite « période » afin de réduire l'intensité lumineuse des faisceaux lumineux émis par lesdites sources lumineuses identifiées.

Bien entendu, si la modification du décalage cyclique du deuxième signal de commande entrainait une diminution du rapport cyclique, alors l'intensité du deuxième signal de commande serait augmentée dans des proportions égales ou sensiblement égales, afin de conserver constant ou quasiment constant l'éclairement de la scène de route.

Ainsi, l'invention concerne un procédé 100 d'aide à la conduite dans lequel le deuxième signal de commande pilotant les faisceaux lumineux pulsés émis par les sources lumineuses d'un module d'éclairage matriciel 22 sont désynchronisées par rapport au premier signal de commande pilotant les commutations des obturateurs d'un écran adaptatif. La désynchronisation prend la forme d'un décalage cyclique du deuxième signal de commande par rapport au premier signal de commande de manière à conserver un éclairement constant de la scène de route SR, tout en diminuant l'éblouissement du conducteur du véhicule automobile 20.

## Revendications

**1.** Procédé d'aide à la conduite (100) permettant d'adapter une intensité lumineuse perçue par un conducteur de véhicule automobile équipé :

- d'au moins un écran adaptatif (26, 28, F) comprenant au moins un obturateur piloté par un premier signal de commande et agencé pour filtrer au moins une partie d'un flux lumineux perçu par le conducteur ; et
- d'au moins un module d'éclairage (22) comprenant une pluralité de sources lumineuses, ledit module d'éclairage matriciel (22) étant piloté par un deuxième signal de commande et configuré pour émettre une pluralité de faisceaux lumineux puisés, lesdits faisceaux lumineux formant collectivement un faisceau d'éclairage d'une scène de route (SR),

ledit procédé d'aide à la conduite (100) comprenant les étapes suivantes :

- détection (101) d'une intensité lumineuse réfléchie par au moins un élément de la scène de route (SR) ;
- comparaison (104) de l'intensité lumineuse réfléchie par au moins une partie des éléments de la scène de route (SR) avec une valeur seuil d'intensité lumineuse dite d'éblouissement;
**caractérisé en ce que** :

- le module d'éclairage est un module d'éclairage matriciel;

et par l'étape additionnelle :

- pour chaque élément de la partie des éléments de la scène de route (SR) dont l'intensité lumineuse réfléchie est supérieure à l'intensité lumineuse d'éblouissement, modification d'un paramètre du deuxième signal de commande de la ou les sources lumineuses sélectionnées émettant un faisceau lumineux éclairant au moins en partie ledit élément de la scène de route (SR) afin de produire un décalage cyclique du deuxième signal de commande correspondant par rapport au premier signal de commande pour réduire l'éblouissement, ledit décalage cyclique conservant sensiblement l'intensité lumineuse du faisceau d'éclairage.

2. Procédé d'aide à la conduite (100) selon la revendication précédente, **caractérisé en ce que**, pour chaque source lumineuse sélectionnée, le paramètre modifié pour produire un décalage cyclique est du type d'une phase et/ou d'un rapport cyclique du deuxième signal de commande correspondant.

3. Procédé d'aide à la conduite (100) selon l'une quelconque des revendications précédentes, **caractérisé en ce que**, pour chaque source lumineuse sélectionnée, la modification du paramètre du deuxième signal de commande est telle que le produit de convolution du deuxième signal de commande par le premier signal de commande est proportionnel à un taux d'éblouissement, ledit taux d'éblouissement étant notamment défini par la différence entre l'intensité lumineuse réfléchie et l'intensité lumineuse d'éblouissement d'une part, divisée par l'intensité lumineuse d'éblouissement.

4. Procédé d'aide à la conduite (100) selon l'une quelconque des revendications 2 ou 3, **caractérisé en ce que**, pour chaque source lumineuse sélectionnée, la phase du deuxième signal de commande correspondant est modifiée de manière à introduire un déphasage par rapport au premier signal de commande.

5. Procédé d'aide à la conduite (100) selon l'une quelconque des revendications 2 à 4, **caractérisé en ce que**, pour chaque source lumineuse sélectionnée, le rapport cyclique du deuxième signal de commande est modifié de manière à décentrer ledit deuxième signal de commande par rapport au premier signal de commande.

6. Procédé d'aide à la conduite (100) selon la revendication précédente, **caractérisé en ce que** lorsque le rapport cyclique du deuxième signal de commande diminue, l'intensité dudit deuxième signal de commande augmente, et/ou lorsque le rapport cyclique du deuxième signal de commande augmente, l'intensité dudit deuxième signal de commande diminue.

7. Procédé d'aide à la conduite (100) selon l'une quelconque des revendications précédentes, **caractérisé en ce que** l'étape de détection d'une intensité lumineuse réfléchie comprend préalablement :

- une étape d'identification (102) d'au moins une source de lumière directe de la scène de route (SR) ; et/ou
- une étape d'identification (102) d'au moins une source de lumière indirecte de la scène de route (SR).

8. Procédé d'aide à la conduite (100) selon la revendication précédente, **caractérisé en ce que** l'étape d'identification comprend :

- une étape ultérieure de localisation (103) sur la scène de route (SR) de chaque source de lumière indirecte identifiée ; et
- une étape d'identification (105) de la ou les sources lumineuses du module d'éclairage matriciel (22) dont les faisceaux lumineux correspondants contribuent à former la source de lumière indirecte correspondante.

**9.** Système d'aide à la conduite (10) d'un véhicule automobile (20), ledit système d'aide à la conduite (10) comprenant des dispositifs configurés pour mettre en oeuvre toutes les étapes du procédé d'aide à la conduite (100) selon l'une quelconque des revendications précédentes.

**10.** Système d'aide à la conduite (10) d'un véhicule automobile (20) comprenant :

- au moins un écran adaptatif (26, 28, F) comprenant au moins un obturateur piloté par un premier signal de commande et agencés pour filtrer au moins une partie d'un flux lumineux perçu par le conducteur ;
- au moins un module d'éclairage matriciel (22) comprenant une pluralité de source lumineuse, ledit module d'éclairage matriciel (22) étant piloté par un deuxième signal de commande et configuré pour émettre une pluralité de faisceaux lumineux puisés, lesdits faisceaux lumineux formant collectivement un faisceau d'éclairage d'une scène de route (SR) ;
- un module de commande (30) connecté à l'écran adaptatif (26, 28, F) et au module d'éclairage matriciel (22), ledit module de commande (30) étant configuré pour générer le premier et le deuxième signal de commande ;
- un moyen d'évaluation (46) d'une intensité lumineuse ;

**caractérisé en ce que** le module d'éclairage est un module d'éclairage matriciel et **en ce que** le module de commande (30) est configuré pour modifier le deuxième signal de commande de la ou les sources lumineuses dont les faisceaux lumineux réfléchis par un élément de la scène de route (SR) contribuent à un éblouissement afin de produire un décalage cyclique du deuxième signal de commande correspondant par rapport au premier signal de commande pour réduire l'éblouissement, ledit décalage cyclique conservant sensiblement l'intensité lumineuse du faisceau d'éclairage.

**11.** Système d'aide à la conduite (10) selon la revendication précédente, **caractérisé en ce que** le module de commande (30) modifie le deuxième signal de commande de manière à ce que son produit de convolution avec le premier signal de commande est proportionnel à un taux d'éblouissement, ledit taux d'éblouissement étant notamment défini par la différence entre l'intensité lumineuse réfléchie et l'intensité lumineuse d'éblouissement d'une part, divisée par l'intensité lumineuse d'éblouissement.

**12.** Système d'aide à la conduite (10) selon l'une quelconque des revendications 10 ou 11, **caractérisé en ce que** le module de commande (30) configure une phase et/ou un rapport cyclique du deuxième signal de commande en fonction de l'intensité lumineuse évaluée par le moyen d'évaluation (46).

**13.** Système d'aide à la conduite (10) selon l'une quelconque des revendications 10 à 12, **caractérisé en ce que** le moyen d'évaluation de l'intensité lumineuse (46) comprend un photodétecteur agencé pour détecter au moins un rayon lumineux provenant de la scène de route (SR).

**14.** Système d'aide à la conduite (10) selon la revendication précédente, **caractérisé en ce que** le module de commande (30) est configuré pour déterminer la position de chaque élément de la scène de route (SR) dont les faisceaux lumineux réfléchis contribuent à l'éblouissement.

**15.** Système d'aide à la conduite (10) selon l'une quelconque des revendications 10 à 14, **caractérisé en ce que** l'écran adaptatif (26, 28, F) est formé par :

- au moins une partie d'un parebrise du véhicule automobile (20) ; et/ou
- un écran disposé entre le parebrise et le conducteur du véhicule automobile (20) ; et/ou
- au moins un verre de lunettes portées par le conducteur du véhicule automobile (20) ; et/ou
- au moins une partie d'une visière d'un casque porté par le conducteur du véhicule automobile (20).

**Patentansprüche**

**1.** Fahrassistenz Verfahren (100) zur Anpassung einer von einem Fahrer eines ausgestatteten Kraftfahrzeugs wahrgenommenen Lichtintensität:

- mindestens einen adaptiven Bildschirm (26, 28, F) mit mindestens einem Verschluss, der durch ein erstes Steuersignal gesteuert wird und angeordnet ist, um mindestens einen Teil eines vom Leiter wahrgenommenen Lichtstroms zu filtern; und
- von mindestens einem Beleuchtungsmodul (22), das eine Vielzahl von Lichtquellen umfasst, wobei das Matrix-Beleuchtungsmodul (22) durch ein zweites Steuersignal angesteuert und konfiguriert wird, um eine Vielzahl von gepulsten Lichtstrahlen zu emittieren, wobei 10 die Lichtstrahlen zusammen einen Beleuchtungsstrahl einer Straßenszene (SR) bilden,

wobei das Fahrassistenz Verfahren (100) die folgenden Schritte umfasst:

- Erfassen (101) einer Lichtintensität, die von mindestens einem Element der Straßenszene (SR) reflektiert wird;
- Vergleich (104) der von mindestens einigen der Elemente der Straßenszene (SR) reflektierten Lichtintensität mit einem Schwellenwert, die eine Blendungslichtintensität genannt ist,

**dadurch gekennzeichnet, dass**:

- das Lichtmodul ein Matrix-Lichtmodul ist;

und durch den zusätzlichen Schritt:

- für jedes Element des Teils der Elemente der Straßenszene (SR), dessen reflektierte Lichtintensität größer ist als die Blendlichtintensität, Modifizieren eines Parameters des zweiten Steuersignals der ausgewählten Lichtquelle(n), das einen Lichtstrahl emittiert, der zumindest teilweise das Element der Straßenszene (SR) beleuchtet, um eine zyklische Verschiebung des entsprechenden zweiten Steuersignals in Bezug auf das erste Steuersignal zu erzeugen, um die Blendung zu reduzieren, wobei die zyklische Verschiebung die "Lichtintensität des Lichtstrahls" im Wesentlichen beibehält.

2. Fahrassistenz Verfahren (100) nach dem vorhergehenden Anspruch, **dadurch gekennzeichnet, dass** der zum Erzeugen einer zyklischen Verschiebung modifizierte Parameter für jede ausgewählte Lichtquelle vom Typ einer Phase und/oder eines zyklischen Verhältnisses des entsprechenden zweiten Steuersignals ist.

3. Fahrassistenz Verfahren (100) nach einem der vorstehenden Ansprüche, **dadurch gekennzeichnet, dass** für jede ausgewählte Lichtquelle die Änderung des Parameters des zweiten Steuersignals so erfolgt, dass das Faltungsprodukt des zweiten Steuersignals durch das erste Steuersignal proportional zu einer Blendungsrate ist, wobei die Blendungsrate insbesondere durch die Differenz zwischen der reflektierten Lichtintensität und der Blendungslichtintensität einerseits, dividiert durch die Blendungslichtintensität, definiert ist.

4. Fahrassistenz Verfahren (100) nach einem der Ansprüche 2 oder 3, **dadurch gekennzeichnet, dass** für jede ausgewählte Lichtquelle die Phase des zweiten entsprechenden Steuersignals so modifiziert wird, dass eine Phasenverschiebung in Bezug auf das erste Steuersignal eingeleitet wird.

5. Fahrassistenz Verfahren (100) nach einem der Ansprüche 2 bis 4, **dadurch gekennzeichnet, dass** für jede ausgewählte Lichtquelle das Tastverhältnis des zweiten Steuersignals so geändert wird, dass das zweite Steuersignal vom ersten Steuersignal versetzt wird.

6. Fahrassistenz Verfahren (100) nach dem vorhergehenden Anspruch, **dadurch gekennzeichnet, dass**, wenn das Tastverhältnis des zweiten Steuersignals abnimmt, die Intensität des zweiten Steuersignals zunimmt und/oder wenn das Tastverhältnis des zweiten Steuersignals zunimmt, die Intensität des zweiten Steuersignals abnimmt.

7. Fahrassistenz Verfahren (100) nach einem der vorhergehenden Ansprüche, **dadurch gekennzeichnet, dass** der Schritt zum Erfassen einer reflektierten Lichtintensität zuvor umfasst:

- einen Identifikationsschritt (102) mindestens einer direkten Lichtquelle der Szene (SR); und/oder
- einen Identifikationsschritt (102) mindestens einer indirekten Lichtquelle der Straßenszene (SR).

8. Verfahren zur Unterstützung des Fahrens (100) nach dem vorhergehenden Anspruch, **dadurch gekennzeichnet,**

**dass** der Identifikationsschritt umfasst einem nachfolgenden Schritt des Lokalisierens (103) auf der Straßenszene (SR), wobei jede identifizierte indirekte Lichtquelle und einen Identifikationsschritt (105) der Lichtquelle(n) des Matrixbeleuchtungsmoduls (22), dessen entsprechende Lichtstrahlen der entsprechenden indirekten Lichtquelle zu bilden beitragen.

9. Fahrassistenzsystem (10) für ein Kraftfahrzeug (20), wobei das Fahrassistenzsystem (10) Vorrichtungen umfasst, die konfiguriert sind, um alle 10 Schritte des Fahrassistenzprozesses (100) gemäß einem der vorhergehenden Ansprüche durchzuführen.

10. Fahrassistenzsystem (10) für ein Kraftfahrzeug (20), umfassend:

   - mindestens einen adaptiven Bildschirm (26, 28, F), der mindestens einen Verschluss umfasst, der durch ein erstes Steuersignal gesteuert und angeordnet ist, um mindestens einen Teil eines vom Fahrer wahrgenommenen Lichtstroms zu filtern;
   - mindestens ein Matrixbeleuchtungsmodul (22), das eine Vielzahl von Lichtquellen umfasst, wobei das Matrixbeleuchtungsmodul (22) durch ein zweites Steuersignal gesteuert und konfiguriert ist, um eine Vielzahl von gepulsten Lichtstrahlen zu emittieren, wobei die Lichtstrahlen zusammen einen Beleuchtungsstrahl einer Straßenszene (SR) bilden;
   - ein Steuermodul (30), das mit der adaptiven Anzeige (26, 28, F) und dem Matrixbeleuchtungsmodul (22) verbunden ist, wobei das Steuermodul (30) konfiguriert ist, um das erste und zweite Steuersignal zu erzeugen;
   - Auswertemittel (46) zum Auswerten einer Lichtintensität; **dadurch gekennzeichnet, dass** das Lichtmodul ein Matrix-Lichtmodul ist und dass das Steuermodul (30) konfiguriert ist, um das zweite Steuersignal der Lichtquelle(n) zu modifizieren, deren von einem Element der Straßenszene (SR) reflektierte Lichtstrahlen zur Blendung beitragen, um einen zyklischen Versatz des entsprechenden zweiten Steuersignals in Bezug auf das erste Steuersignal zu erzeugen, um die Blendung zu reduzieren, wobei der zyklische Versatz im Wesentlichen die Lichtintensität des Lichtstrahls beibehält.

11. Fahrassistenzsystem (10) nach dem vorhergehenden Anspruch, **dadurch gekennzeichnet, dass** das Steuermodul (30) das zweite Steuersignal so modifiziert, dass sein Faltungsprodukt mit dem ersten Steuersignal proportional zu einer Blendungsbegrenzung ist, wobei die Blendungsbegrenzung durch die Differenz zwischen der reflektierten Lichtintensität und der Blendungshelligkeit einerseits, dividiert durch die Blendungshelligkeit, definiert ist.

12. Fahrassistenzsystem (10) nach einem der Ansprüche 10 oder II, **dadurch gekennzeichnet, dass** das Steuermodul (30) eine Phase und/oder ein Tastverhältnis des zweiten Steuersignals in Abhängigkeit von der durch die Auswertemittel (46) ausgewerteten Lichtintensität 10 konfiguriert.

13. Fahrassistenzsystem (10) nach einem der Ansprüche 10 bis 12, **dadurch gekennzeichnet, dass** die Lichtintensitätsauswertungsmittel (46) einen Photodetektor umfassen, der angeordnet ist, um mindestens einen Lichtstrahl aus der Straßenszene (SR) zu erfassen.

14. Fahrassistenzsystem (10) nach dem vorstehenden Anspruch, **dadurch gekennzeichnet, dass** das Steuermodul (30) konfiguriert ist, um die Position jedes Elements der Straßenszene (SR) zu bestimmen, dessen reflektierte Lichtstrahlen zur Blendung beitragen.

15. Fahrassistenzsystem (10) nach einem der Ansprüche 10 bis 14, **dadurch gekennzeichnet dass** der, adaptive Bildschirm (26, 28, F) gebildet ist durch:

   - mindestens einen Teil einer Windschutzscheibe des Kraftfahrzeugs (20); und/oder
   - ein Bildschirm zwischen der Windschutzscheibe und dem Fahrer des Kraftfahrzeugs (20); und/oder
   - mindestens eine vom Fahrer des Kraftfahrzeugs (20) getragene Brillenlinse; und/oder
   - mindestens einen Teil eines Visiers eines Helmes, der vom Fahrer des Kraftfahrzeugs (20) getragen wird.

**Claims**

1. Driving assistance method (100) for adapting a light intensity perceived by a driver of a motor vehicle equipped with:

   - at least one adaptive screen (26, 28, F) comprising at least one shutter controlled by a first control signal and arranged to filter at least part of a luminous flux perceived by the driver and

- at least one lighting module (22) comprising a plurality of light sources, said matrix lighting module (22) being driven by a second control signal and configured to emit a plurality of pulsed light beams, said light beams collectively forming an illumination beam of a road scene (SR), said driving assistance method (100) comprising the following steps:

• Detection (101) of a light intensity reflected by at least one element of the road scene (SR);
• comparison (104) of the light intensity reflected by at least some of the elements of the road scene (SR) with a threshold value of so-called glare light intensity, **characterized in that**:

- the light module is a matrix light module; and by the additional step:
- for each element of the part of the elements of the road scene (SR) whose reflected light intensity is greater than the glare light intensity, modifying a parameter of the second control signal of the selected light source(s) emitting a light beam illuminating at least in part said element of the road scene (SR) to produce a cyclic shift of the corresponding second control signal with respect to the first control signal to reduce glare, said cyclic shift substantially preserving the light intensity of the light beam.

2. A driving assistance method (100) according to the previous claim, **characterized in that**, for each selected light source, the parameter modified to produce a cyclic shift is of the type of a phase and/or a cyclic ratio of the corresponding second control signal.

3. A driving assistance method (100) according to any of the preceding claims, **characterized in that**, for each selected light source, the modification of the parameter of the second control signal is such that the convolution product of the second control signal by the first control signal is proportional to a glare rate, said glare rate being defined in particular by the difference between the reflected light intensity and the glare light intensity on the one hand, divided by the glare light intensity.

4. A driving assistance method (100) according to any of claims 2 or 3, **characterized in that**, for each selected light source, the phase of the second corresponding control signal is modified so as to introduce a phase shift with respect to the first control signal.

5. A driving assistance method (100) according to any one of claims 2 to 4, **characterized in that**, for each selected light source, the duty cycle of the second control signal is modified so as to offset said second control signal from the first control signal.

6. A driving assistance method (100) according to the previous claim, **characterized in that** when the duty cycle of the second control signal decreases, the intensity of the said second control signal increases, and/or when the duty cycle of the second control signal increases, the intensity of the said second control signal decreases.

7. A driving assistance method (100) according to any of the preceding claims, **characterized in that** the step of detecting a reflected light intensity previously comprises:

- a step of identifying (102) at least one direct light source of the scene (SR); and/or
- a step of identifying (102) at least one indirect light source of the road scene (SR).

8. A driving assistance method (100) according to the previous claim, **characterized in that** the identification step comprises :

- a subsequent step of locating (103) on the road scene (SR) each identified indirect light source
- and a step of identifying (105) the light source(s) of the matrix lighting module (22) whose corresponding light beams contribute to forming the corresponding indirect light source.

9. A driving assistance system (10) for a motor vehicle (20), said driving assistance system (10) comprising devices configured to implement all steps of the driving assistance process (100) according to any of the preceding claims.

10. A driving assistance system (10) for a motor vehicle (20) comprising:

- at least one adaptive screen (26, 28, F) comprising at least one shutter controlled by a first control signal and arranged to filter at least a portion of a light flux perceived by the driver;
- at least one matrix lighting module (22) comprising a plurality of light sources, said matrix lighting module (22) being controlled by a second control signal and configured to emit a plurality of pulsed light beams, said light beams collectively forming an illumination beam of a road scene (SR);
- a control module (30) connected to the adaptive display (26, 28, F) and the matrix lighting module (22), said control module (30) being configured to generate the first and second control signals;
- evaluating means (46) for evaluating a light intensity;

**characterized in that** the light module is a matrix light module and **in that** the control module (30) is configured to modify the second control signal of the light source(s) whose light beams reflected by an element of the road scene (SR) contribute to glare in order to produce a cyclic offset of the corresponding second control signal with respect to the first control signal to reduce glare, said cyclic offset substantially maintaining the light intensity of the light beam.

11. A driving assistance system (10) according to the previous claim, **characterized in that** the control module (30) modifies the second control signal so that its convolution product with the first control signal is proportional to a glare rate, said glare rate being defined by the difference between the reflected light intensity and the glare light intensity on the one hand, divided by the glare light intensity.

12. A driving assistance system (10) according to any of claims 10 or 11, **characterized in that** the control module (30) configures a phase and/or duty cycle of the second control signal as a function of the light intensity evaluated by the evaluation means (46).

13. A driving assistance system (10) according to any of claims 10 to 12, **characterized in that** the light intensity evaluation means (46) comprises a photodetector arranged to detect at least one light beam from the road scene (SR).

14. A driving assistance system (10) according to the above claim, **characterized in that** the control module (30) is configured to determine the position of each element of the road scene (SR) whose reflected light beams contribute to glare.

15. A driving assistance system (10) according to any of claims 10 to 14, **characterized in that** the adaptive screen (26, 28, F) is formed by :

- at least a part of the windscreen of the motor vehicle (20); and/or
- a screen disposed between the windscreen and the driver of the motor vehicle (20); and/or
- at least one spectacle lens worn by the driver of the motor vehicle (20) - and/or
- at least part of a visor of a helmet worn by the driver of the motor vehicle (20).

FIGURE 1

FIGURE 2

FIGURE 3A

FIGURE 3B

FIGURE 3C

**EP 3 357 753 B1**

## RÉFÉRENCES CITÉES DANS LA DESCRIPTION

### Documents brevets cités dans la description

- US 2015197139 A1